# EUROPEAN PATENT APPLICATION

(11) **EP 0 957 649 A2**
(43) Date of publication of application: **17.11.1999**
(21) Application number: 99108773.5
(22) Date of filing: 03.05.1999
(51) Int. Cl.: H04Q 7/28

(54) **Tone signalling**

(30) Priority: 13.05.1998 GB 9810109
(71) Applicant: MOTOROLA LTD, Basingstoke, Hampshire RG22 4PD (GB)
(72) Inventor: Webster, Andrew John, Basingstoke,Hampshire RG22 4Ul (GB); Zhang, Yong, Southhampton, Hampshire SO17 3RH (GB)
(74) Representative: Ibbotson, Harold

(57) **Abstract**

A method for detecting the validity of a tone signal in radio communications system is provided. The method includes determining whether a system parameter of an incoming tone is within a predetermined error of a preferred system.

## Description

### Field of the Invention

This invention generally relates to determining the validity of a tone signal in a communications system, and specifically relates to determining whether a particular system parameter is within a predetermined error of a valid system parameter.

### Background of the Invention

In the present radio communications systems having tone signalling such as CTCSS, or Continuous Tone Control Squelch System, the radios must poll or scan a number of different communications resources, or channels, in order to determine a valid signalling tone. The system, or radio, performs a lengthy valid detection scheme on incoming signals in order to determine the signals' validity. The detection schemes are continuous and time consuming. Furthermore, the detection schemes deplete battery power and limit battery life.

Instead of a lengthy detection scheme, a rapid rejection scheme is desired so that the radio can quickly assess an invalid tone signal and move onto its next action.

Such a rapid rejection scheme should provide a fast method for scanning channels which have a coded squelch system. In current radio systems, private line, or PL, is often used to group people together, e.g., in a large communications system with limited radio frequencies (RF) available, radio users may be split into Security, Maintenance, Line Supervisors etc., all on the same RE channel, but with different PL codes to avoid users from one group having to listen to conversations from another group.

Channel Scan is used to allow monitoring of a number of channels. The radio scans each of the channels in the list in turn, checking for presence of a carrier, and possibly for presence of a squelch system signal such as private line, PL, or digital private line, DPL.

A problem with requiring the squelch system signal to be present before holding the radio on that channel is the long decode time (typically 250msecs) associated with these low frequency (below 250Hz) coding systems. The long decode time is partly due to the low frequencies used in the squelch systems, and also due to the number of cycles of the incoming squelch signal required to determine that it matches the decode parameters for the channel.

Thus a "scan cycle" (from the time of monitoring a channel for the first time to the time it re-monitors that channel) may be as long as several seconds, which obviously leads to missing parts of a conversation. As stated above, often channels in the scan list may be on the same RF frequency, just differentiated by squelch system parameters.

Furthermore, if a rapid detection scheme is implemented in a radio its battery life may be prolonged. A need exists for a radio to rapidly detect an invalid signal and be able to go to battery save mode, thus saving battery power.

### Summary of the Invention

According to the present invention, a method of determining an invalid tone signal on a plurality of communications resources is provided comprising the step of sampling tone signals on the communications resources in a predefined order for a minimum number of cycles to determine that a system parameter is not within a predetermined error of a preferred system parameter.

### Brief Description of Drawings

FIG. 1 is a block diagram of an embodiment of the present invention.
FIG. 2 is a block diagram of a second embodiment of the present invention
FIG. 3 is a timing diagram used to describe an embodiment of the present invention.

### Detailed Description of the Drawings

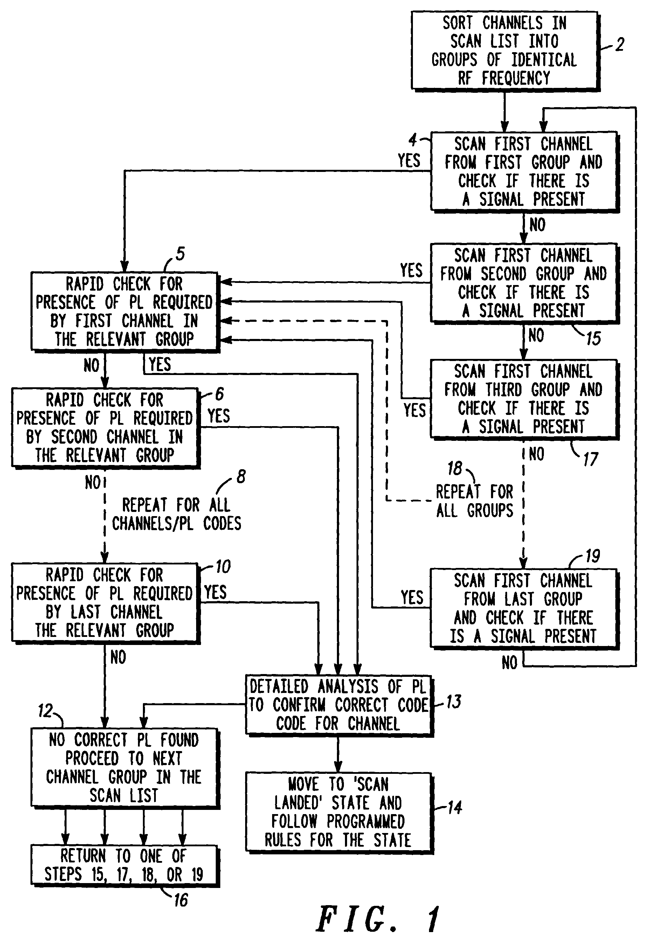

FIG. 1 shows a block diagram of a method of determining the validity of a tone signal in a radio communications system. For example, in a CTCSS, or Continuous Tone Control Squelch System, a radio receiver may be listening to a various number of signalling tones in order to decide which is a valid or invalid tone. Depending on the validity of the incoming tones the radio may be programmed to take a number of different actions. If a valid signalling tone is received the radio may open up its speaker and begin communications. If an invalid signalling tone is received the radio may go on to sample another tone or may put the radio to sleep in order to save battery life. FIG. 1 shows how to quickly scan a plurality of communications resources in order to quickly reject the signal and continue to sample. Thus, the method employed is one to quickly determine an invalid tone signal by sampling tone signals on the communications resources in a predefined order for a minimum number of cycles to determine that a system parameter is not within a predetermined error of a preferred system parameter. A system parameter for a signal may be the transition or edge of the signal.

By way of an example, referring to FIG. 1, communications resources, or channels, in a scan list are grouped into channels with the same RF frequency data, step 2. This may be done in the radio by comparing the synthesiser data for all channels in the scan list, or the scan list may be coded in such a way that the radio automatically searches the channels in a defined sequence. Specifically, programmed information may define which channels are in which groups, the order of scanning of the groups, and, for each group, the order in which the channels should be scanned for squelch signals.

In step 4, the radio scans a first group, by scanning a prioritised channel in that group, and checks for the presence of an RF signal. If no signal is found, then the radio scans a prioritised channel in the next group, step 15, and so on for any subsequent groups, until the radio gets back to the first group, steps 15, 17,18,19, 2 or until it detects a signal.

If an RF signal is found, step 5, the radio carries out a rapid signal reject routine. The rapid signal reject routine works best by predetermining system parameters and ensuring they are well differentiated, for example, squelch system parameters. The communications system predetermines significantly different frequencies for CTCSS (or Private Line, PL), or predetermines differences in the more significant address elements of the data stream for Data Private Line (or DPL) for channels which are in the same group, on the same RF frequency. The method of the present invention allows rapid rejection of DPL signals. DPL Codes within a group are differentiated at the earliest possible point in the DPL Code data stream allowing for quick evaluation of the signal. For example, the scan can continue to the next "channel" (= DPL code or new RF channel), or the receiver be "put back to sleep", based on the smallest possible evaluation time of the incoming DPL data stream.

The present invention enables the radio to monitor the incoming signal's low frequency components for a much shorter time than would be required to accept the signal as the one defined for the particular channel, or to determine a valid signal. The present invention allows the radio to reject the currently incoming signal as invalid, or in other words, determines that the incoming tone signal is definitely not the required squelch signal for the particular channel within 3 or 4 signal transitions. There is always a trade-off between speed and incorrectly rejecting a valid signal which has an amount of noise corruption, causing extraneous transitions. As an example, with a worst case 67Hz PL tone, the transitions or zero-crossings for the demodulated signal occur every 7.5msecs resulting in 2 transitions per period of the 67Hz tone. Thus, using the rapid rejection method of the present invention, a rejection may be determined for a different frequency in 20-25msecs.

If, after the initial 3-4 transition evaluation, the squelch signal appears to be the correct one for the channel, the radio continues with the standard =250msecs decode routine, step 13, to obtain the necessary confidence level in the signal, and then may follow the pre-rogrammed rules for activity following a successful decode (e.g., unmute the loudspeaker etc.) as in step 14.

If the squelch signal does not match the parameters for the first channel in the group, the radio moves to the next channel(s), and again carries out the rapid signal reject routine, steps 6, 8, 10.

If the radio's squelch signal decoder is "non-predictive" (i.e. it evaluates the incoming signal and determines its squelch signal parameters, rather than the traditional correlator decoders, which can only measure the incoming signal against a set of parameters programmed for that channel and determine whether the incoming signal is correct or incorrect), then, once the initial evaluation has been made, the data can be compared against the signalling requirements of all of the channels in the group, and either the signal can be rejected for all channels, or, if it appears to match one of the channels, the radio can continue with the standard decode routine (to obtain full confidence that the incoming signal meets the decode requirements).

If no correct tone signal parameters, after sampling, are found to be within a predetermined error of the valid tone signal parameters then the radio proceeds to the next channel group in the scan list, step 12. The radio returns to checking for RF signals on the first channel in the next group, step 16, depending on which channel caused the activity in step 5.

Thus FIG. 1, shows a method of scanning at least two communications resources in a radio communications system by identifying at least one system parameter of a valid tone signal, sampling a first tone signal on a first communications resource for a minimum number of cycles to determine at least one system parameter of the first tone signal, and comparing the at least one system parameter of the first tone signal with the at least one system parameter of the valid tone signal. If the at least one system parameter of the first tone signal is not within a predetermined error from the at least one system parameter of the valid tone signal then, sampling is continued for subsequent tone signals until a signal parameter is found to be within a predetermined error of a desired signal parameters.

Another way to use the rapid reject method is to quickly determine that an incoming signal is invalid and go on to the next state of the radio which may be to conserve battery life.

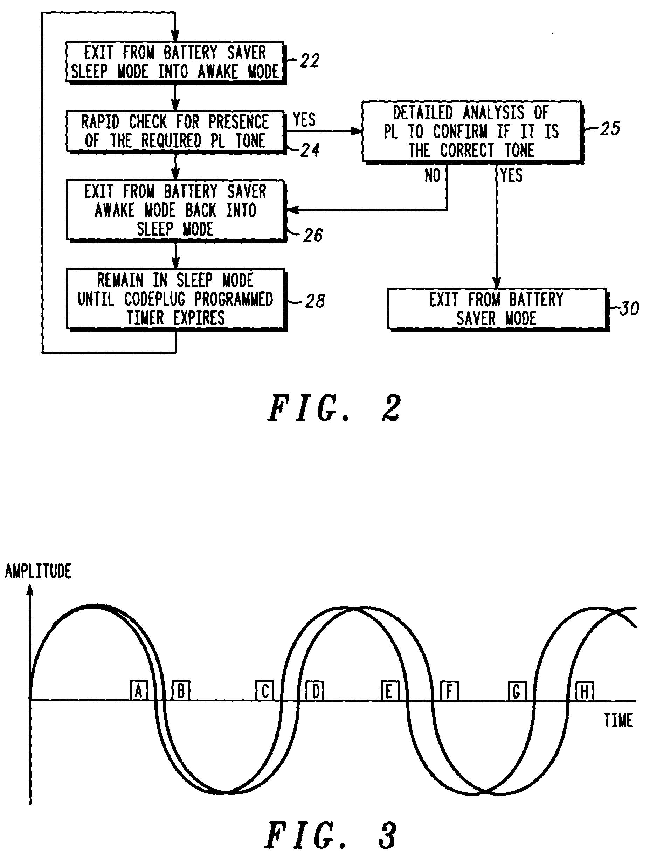

FIG. 2 shows a further embodiment of the present invention where an incoming signal is quickly assessed as invalid and the radio is put to sleep to save the battery life. The method includes determining the validity of a first tone signal in a receiver in a radio communications by identifying at least one system parameter for a valid tone signal, sampling the first tone signal a minimum number of cycles to determine at least one system parameter of the first tone signal, and comparing the at least one system parameter of the first tone signal with the at least one system parameter of the valid tone signal.

The method further includes putting the receiver in sleep mode if the at least one system parameter of the first tone signal is not within a predetermined error from the at least one system parameter of the valid tone signal.

Referring to FIG. 2, step 22 exits the radio from sleep mode into receive mode to allow for the rapid check for presence of a required signalling tone as described above, step 24. If there is a detection of a valid tone according to the rapid signal rejection method of the present invention then a detailed analysis of the signalling tone is performed to confirm that the tone is correct, step 25. If the tone is correct then radio exits battery saver mode and performs further actions, such as opening the speaker etc., that are required by the radio when a valid PL tone is detected, step 30.

If no valid tone is detected in step 24, then in step 26 the radio exits from battery awake mode and returns to battery sleep mode. The radio remains in battery sleep mode until it is timed to repeat the process, step 28.

FIG. 3 below shows a timing diagram of two CTCSS signals of different frequencies. The rapid signal rejection routine of this invention requires that, within 3-4 zero-crossings of the demodulated CTCSS signal, the radio controller can determine whether it has any possibility of being the required (or valid) CTCSS signal for the channel under evaluation.

As shown in FIG. 3, for the lower frequency tone, zero-crossings are expected at positions "B", "D", "F" and "H". For the higher frequency tone, zero-crossings are expected at positions "A", "C", "E" and "G". For the lowest CTCSS frequency, 67Hz, these transitions occur every 7.463msecs, which for a typical radio controller would equate to 7463 E-Clock cycles (assuming an E-Clock of 1 Mhz). For the 2nd lowest CTCSS frequency, 69.3Hz, the transitions will occur every 7.215msecs, which would equate to 7215 E-Clock cycles, i.e., 248 less than with a 67Hz CTCSS frequency. For the highest CTCSS frequency, 250.3Hz, the transitions will occur every 1.998msecs, which would equate to 1998 E-Clock cycles (this is the limit of timing resolution for the timer used to record the location of the zero-crossings). For the 2nd highest CTCSS frequency, 241.8Hz, the transitions will occur every 2.068msecs, which would equate to 2068 E-Clock cycles, i.e., 70 more than with 250.3Hz. This, however, does not take into account the permitted frequency error in the incoming frequency. At the worst case high frequency end of the CTCSS frequency range, the nominal 70 E-Clock cycle difference can reduce to [2047-2018] = 29 cycles, for possible incoming CTCSS frequencies of [250.3 - 1.0%] = 247.8Hz and [241.8 + 1.0%] = 244.22Hz.

Clearly over a number of zero-crossings, the difference between the next zero-crossing for a particular CTCSS frequency and that for an adjacent CTCSS frequency increases linearly (see FIG. 3 where - Time [B - A] << Time [H - G]). Therefore, at some number of received zero-crossings, it will be clear that the signal either may be valid and further timing accuracy evaluation is required, or the signal is definitely not the correct CTCSS signal for the channel. The number of zero-crossings required before this judgement can be made is dependent on the frequency difference between all of the CTCSS frequencies used across the channels which have been grouped together based on having the same receiver RF frequency. It is not necessary to look at other channels, since the evaluation is carried out on a group by group basis, IF the radio has first detected the presence of the correct RF frequency for the group. Therefore, by suitable choice of CTCSS frequencies, it is easy to create time differences, (between the location of successive zero-crossings for the wanted CTCSS frequency and those for the closest CTCSS frequency in the group), on the order of many hundreds of E-Clock cycles - with these differences between successive zero-crossing points, clearly an algorithm which examines 3 or 4 such transitions will have no difficulty in accepting (for more detailed analysis) or rejecting the incoming signal.

The number of transitions to be used for the algorithm could be varied, depending on an evaluation of the CTCSS frequencies for the channels in the group, i.e., if there are two adjacent frequencies, the algorithm could evaluate more transitions. This would slow a scan cycle down, but would at least cater for situations where the selection of CTCSS frequencies is predetermined by certain activities such as adding radios to existing systems.

Thus, the present invention provides rapid detection of an invalid tone signal in a communications system to allow the radio to quickly evaluate incoming signals and go onto a next desired action. As described above the present invention allows the radio to utilise the battery efficiently or scan channels more efficiently.

## Claims

1. A method of determining an invalid tone signal on a plurality of communications resources comprising the step of:
sampling tone signals on the communications resources in a predefined order for a minimum number of cycles to determine that a system parameter is not within a predetermined error of a preferred system parameter.

2. A method of scanning at least two communications resources in a radio communications system, the method comprising the steps of:
identifying at least one system parameter of a valid tone signal;
sampling a first tone signal on a first communications resource for a minimum number of cycles to determine at least one system parameter of the first tone signal; and
comparing the at least one system parameter of the first tone signal with the at least one system parameter of the valid tone signal, if the at least one system parameter of the first tone signal is not within a predetermined error from the at least one system parameter of the valid tone signal then,
sampling a second tone signal on a second communications resource for a minimum number of cycles to determine at least one system parameter of the second tone signal; and
comparing the at least one system parameter of the second tone signal with the at least one system parameter of the valid tone signal.

3. A method of determining the validity of a first tone signal in a receiver in a radio communications system comprising the steps of:
identifying at least one system parameter for a valid tone signal;
sampling the first tone signal a minimum number of cycles to determine at least one system parameter of the first tone signal; and
comparing the at least one system parameter of the first tone signal with the at least one system parameter of the valid tone signal.

4. The method of claim 3 further comprising the step of:
pulling the receiver in sleep mode if the at least one system parameter of the first tone signal is not within a predetermined error from the at least one system parameter of the valid tone signal.

5. The method of any of the preceding claims wherein the system parameter is a transition or edge of the tone signal.

6. The method of any of the preceding claims wherein the tone signal is a continuous tone control squelch system tone.

7. The method of any of the preceding claims wherein the tone signal is a digital private line signal.
